# EUROPEAN PATENT APPLICATION

(11) **EP 3 343 977 A1**
(43) Date of publication of application: **04.07.2018**
(21) Application number: 15904451.0
(22) Date of filing: 25.09.2015
(51) Int. Cl.: H04W 28/08

(54) **METHOD AND DEVICE FOR INTEROPERATION BETWEEN NETWORKS**

(71) Applicant: Huawei Technologies Co., Ltd., Longgang District Shenzhen, Guangdong 518129 (CN)
(72) Inventor: ZHAO, Li, Shenzhen Guangdong 518129 (CN); GUO, Yi, Shenzhen Guangdong 518129 (CN); LUO, Haiyan, Shenzhen Guangdong 518129 (CN); PENG, Wenjie, Shenzhen Guangdong 518129 (CN); SHI, Xiaoli, Shenzhen Guangdong 518129 (CN)
(74) Representative: Körber, Martin Hans
(86) International application number: PCT/CN2015/090681
(87) International publication number: WO 2017/049575

(57) **Abstract**

Embodiments of the present invention provide a method of interworking between networks and a device. A network device sends an indication message to UE, where the indication message is used to indicate whether the UE is allowed to perform RAN rule-based LTE-WLAN interworking in an idle mode, so that the UE can determine, according to an indication of a network side, whether to perform the RAN rule-based LTE-WLAN interworking in an idle mode, and the network side can accurately control LTE-WLAN interworking for the UE in an idle mode.

## Description

### TECHNICAL FIELD

Embodiments of the present invention relate to communications technologies, and in particular, to a method of interworking between networks and a device.

### BACKGROUND

Interworking between networks is an important data offloading technology, and can be used to implement offloading on service data of the same user equipment (UE, User Equipment) between different networks. For example, the interworking between networks may be Long Term Evolution (LTE, Long Term Evolution)-wireless local area network (WLAN, Wireless Local Area Networks) interworking (IWK, LTE-WLAN inter-working).

In the prior art, there are two types of LTE-WLAN interworking: One type is radio access network (RAN, Radio Access Network) rule-based LTE-WLAN interworking, and the other type is enhanced LTE-WLAN interworking. In the RAN rule-based LTE-WLAN interworking, a base station sends a related parameter of LTE-WLAN interworking to user equipment, and the UE uses a policy of the RAN rule-based LTE-WLAN interworking to complete a decision of interworking between LTE and a WLAN for the UE, to determine a target WLAN (or target LTE). In the enhanced LTE-WLAN interworking, the UE sends a measurement result to the base station by using a WLAN measurement report sent to the base station, and the base station uses a policy of the enhanced LTE-WLAN interworking to determine a target WLAN (or target LTE) for the UE, and sends the target WLAN (or the target LTE) to the UE.

However, in the prior art, a network side cannot accurately control LTE-WLAN interworking for the UE in an idle mode.

### SUMMARY

Embodiments of the present invention provide a method of interworking between networks and a device, so as to resolve a prior-art problem that a network side cannot accurately control LTE-WLAN interworking for UE in an idle mode.

According to a first aspect, an embodiment of the present invention provides a method of interworking between networks, including:
receiving, by user equipment (UE), an indication message sent by a network device, where the indication message is used to indicate whether the UE is allowed to perform radio access network (RAN) rule-based Long Term Evolution (LTE)-wireless local area network (WLAN) interworking in an idle mode; and
when the indication message is used to indicate that the UE is allowed to perform the RAN rule-based LTE-WLAN interworking in an idle mode, determining, by the UE, to perform the RAN rule-based LTE-WLAN interworking in an idle mode; or
when the indication message is used to indicate that the UE is not allowed to perform the RAN rule-based LTE-WLAN interworking in an idle mode, determining, by the UE, to perform LTE-WLAN interworking in a non-idle mode.

With reference to the first aspect, in a first possible implementation of the first aspect, the determining, by the UE, to perform LTE-WLAN interworking in a non-idle mode includes:
determining, by the UE, to perform the RAN rule-based LTE-WLAN interworking in a non-idle mode; or determining, by the UE, to perform enhanced LTE-WLAN interworking in a non-idle mode.

With reference to the first aspect or the first possible implementation of the first aspect, in a second possible implementation of the first aspect, the indication message includes indication information that is used to indicate whether the UE is allowed to perform the RAN rule-based LTE-WLAN interworking in an idle mode.

With reference to the second possible implementation of the first aspect, in a third possible implementation of the first aspect, the indication message further includes:
information indicating whether the network device supports the enhanced LTE-WLAN interworking.

With reference to the first aspect or the first possible implementation of the first aspect, in a fourth possible implementation of the first aspect, the indication message includes information indicating whether the network device supports the enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

With reference to any one of the first aspect, or the first to the fourth possible implementations of the first aspect, in a fifth possible implementation of the first aspect, the network device is the base station, and the indication message includes a broadcast message or a radio resource control (RRC) message.

With reference to any one of the first aspect, or the first to the fourth possible implementations of the first aspect, in a sixth possible implementation of the first aspect, the network device is a mobility management entity (MME), and the indication message includes a non-access stratum (NAS) message.

According to a second aspect, an embodiment of the present invention provides a method of interworking between networks, including:
generating, by a network device, an indication message, where the indication message is used to indicate whether user equipment (UE) is allowed to perform radio access network (RAN) rule-based Long Term Evolution (LTE)-wireless local area network (WLAN) interworking in an idle mode; and
sending, by the network device, the indication message to the UE.

With reference to the second aspect, in a first possible implementation of the second aspect, the indication message includes information indicating whether the network device supports enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

With reference to the second aspect, in a second possible implementation of the second aspect, the indication message includes indication information that is used to indicate whether the UE is allowed to perform the RAN rule-based LTE-WLAN interworking in an idle mode.

With reference to the second possible implementation of the second aspect, in a third possible implementation of the second aspect, the indication message further includes:
information indicating whether the network device supports enhanced LTE-WLAN interworking.

With reference to any one of the second aspect, or the first to the third possible implementations of the second aspect, in a fourth possible implementation of the second aspect, the network device is the base station, and the indication message includes a broadcast message or a radio resource control message.

With reference to any one of the second aspect, or the first to the third possible implementations of the second aspect, in a fifth possible implementation of the second aspect, the network device is a mobility management entity (MME), and the indication message includes a non-access stratum (NAS) message.

According to a third aspect, an embodiment of the present invention provides user equipment (UE), including:
a receiving module, configured to receive an indication message sent by a network device, where the indication message is used to indicate whether the UE is allowed to perform radio access network (RAN) rule-based Long Term Evolution (LTE)-wireless local area network (WLAN) interworking in an idle mode; and
a processing module, configured to: when the indication message is used to indicate that the UE is allowed to perform the RAN rule-based LTE-WLAN interworking in an idle mode, determine to perform the RAN rule-based LTE-WLAN interworking in an idle mode; or when the indication message is used to indicate that the UE is not allowed to perform the RAN rule-based LTE-WLAN interworking in an idle mode, determine to perform LTE-WLAN interworking in a non-idle mode.

With reference to the third aspect, in a first possible implementation of the third aspect, that the processing module determines to perform the LTE-WLAN interworking in a non-idle mode specifically includes:
determining to perform the RAN rule-based LTE-WLAN interworking in a non-idle mode; or determining to perform enhanced LTE-WLAN interworking in a non-idle mode.

With reference to the third aspect or the first possible implementation of the third aspect, in a second possible implementation of the third aspect, the indication message includes indication information that is used to indicate whether the UE is allowed to perform the RAN rule-based LTE-WLAN interworking in an idle mode.

With reference to the second possible implementation of the third aspect, in a third possible implementation of the third aspect, the indication message further includes:
information indicating whether the network device supports the enhanced LTE-WLAN interworking.

With reference to the third aspect or the first possible implementation of the third aspect, in a fourth possible implementation of the third aspect, the indication message includes information indicating whether the network device supports the enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

With reference to any one of the third aspect, or the first to the fourth possible implementations of the third aspect, in a fifth possible implementation of the third aspect, the network device is the base station, and the indication message includes a broadcast message or a radio resource control (RRC) message.

With reference to any one of the third aspect, or the first to the fourth possible implementations of the third aspect, in a sixth possible implementation of the third aspect, the network device is a mobility management entity (MME), and the indication message includes a non-access stratum (NAS) message.

According to a fourth aspect, an embodiment of the present invention provides a network device, including:
a generation module, configured to generate an indication message, where the indication message is used to indicate whether user equipment (UE) is allowed to perform radio access network (RAN) rule-based Long Term Evolution (LTE)-wireless local area network (WLAN) interworking in an idle mode; and
a sending module, configured to send the indication message to the UE.

With reference to the fourth aspect, in a first possible implementation of the fourth aspect, the indication message includes indication information that is used to indicate whether the UE is allowed to perform the RAN rule-based LTE-WLAN interworking in an idle mode.

With reference to the first possible implementation of the fourth aspect, in a second possible implementation of the fourth aspect, the indication message further includes:
information indicating whether the network device supports enhanced LTE-WLAN interworking.

With reference to the fourth aspect, in a third possible implementation of the fourth aspect, the indication message includes information indicating whether the network device supports enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

With reference to any one of the fourth aspect, or the first to the third possible implementations of the fourth aspect, in a fourth possible implementation of the fourth aspect, the network device is the base station, and the indication message includes a broadcast message or a radio resource control message.

With reference to any one of the fourth aspect, or the first to the third possible implementations of the fourth aspect, in a fifth possible implementation of the fourth aspect, the network device is a mobility management entity (MME), and the indication message includes a non-access stratum (NAS) message.

According to a fifth aspect, an embodiment of the present invention provides user equipment (UE), including:
a receiver, configured to receive an indication message sent by a network device, where the indication message is used to indicate whether the UE is allowed to perform radio access network (RAN) rule-based Long Term Evolution (LTE)-wireless local area network (WLAN) interworking in an idle mode; and
a processor, configured to: when the indication message is used to indicate that the UE is allowed to perform the RAN rule-based LTE-WLAN interworking in an idle mode, determine to perform the RAN rule-based LTE-WLAN interworking in an idle mode; or when the indication message is used to indicate that the UE is not allowed to perform the RAN rule-based LTE-WLAN interworking in an idle mode, determine to perform LTE-WLAN interworking in a non-idle mode.

With reference to the fifth aspect, in a first possible implementation of the fifth aspect, that the processor determines to perform the LTE-WLAN interworking in a non-idle mode specifically includes:
determining to perform the RAN rule-based LTE-WLAN interworking in a non-idle mode; or determining to perform enhanced LTE-WLAN interworking in a non-idle mode.

With reference to the fifth aspect or the first possible implementation of the fifth aspect, in a second possible implementation of the fifth aspect, the indication message includes indication information that is used to indicate whether the UE is allowed to perform the RAN rule-based LTE-WLAN interworking in an idle mode.

With reference to the second possible implementation of the fifth aspect, in a third possible implementation of the fifth aspect, the indication message further includes:
information indicating whether the network device supports the enhanced LTE-WLAN interworking.

With reference to the fifth aspect or the first possible implementation of the fifth aspect, in a fourth possible implementation of the fifth aspect, the indication message includes information indicating whether the network device supports the enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

With reference to any one of the fifth aspect, or the first to the fourth possible implementations of the fifth aspect, in a fifth possible implementation of the fifth aspect, the network device is the base station, and the indication message includes a broadcast message or a radio resource control (RRC) message.

With reference to any one of the fifth aspect, or the first to the fourth possible implementations of the fifth aspect, in a sixth possible implementation of the fifth aspect, the network device is a mobility management entity (MME), and the indication message includes a non-access stratum (NAS) message.

According to a sixth aspect, an embodiment of the present invention provides a network device, including:
a processor, configured to generate an indication message, where the indication message is used to indicate whether user equipment (UE) is allowed to perform radio access network (RAN) rule-based Long Term Evolution (LTE)-wireless local area network (WLAN) interworking in an idle mode; and
a transmitter, configured to send the indication message to the UE.

With reference to the sixth aspect, in a first possible implementation of the sixth aspect, the indication message includes indication information that is used to indicate whether the UE is allowed to perform the RAN rule-based LTE-WLAN interworking in an idle mode.

With reference to the first possible implementation of the sixth aspect, in a second possible implementation of the sixth aspect, the indication message further includes:
information indicating whether the network device supports enhanced LTE-WLAN interworking.

With reference to the sixth aspect, in a third possible implementation of the sixth aspect, the indication message includes information indicating whether the network device supports enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

With reference to any one of the sixth aspect, or the first to the third possible implementations of the sixth aspect, in a fourth possible implementation of the sixth aspect, the network device is the base station, and the indication message includes a broadcast message or a radio resource control message.

With reference to any one of the sixth aspect, or the first to the third possible implementations of the sixth aspect, in a fifth possible implementation of the sixth aspect, the network device is a mobility management entity (MME), and the indication message includes a non-access stratum (NAS) message.

The embodiments of the present invention provide a method of interworking between networks and a device. The network device sends the indication message to the UE, where the indication message is used to indicate whether the UE is allowed to perform the RAN rule-based LTE-WLAN interworking in an idle mode, and the UE can determine, according to the foregoing indication message, whether to perform the RAN rule-based LTE-WLAN interworking in an idle mode. Therefore, by using the technical solutions provided in the embodiments of the present invention, a network side can accurately control LTE-WLAN interworking for the UE in an idle mode.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of an application scenario of a method of interworking between networks according to the present invention;
FIG. 2 is a flowchart of Embodiment 1 of a method of interworking between networks according to the present invention;
FIG. 3 is a flowchart of Embodiment 2 of a method of interworking between networks according to the present invention;
FIG. 4 is a flowchart of Embodiment 3 of a method of interworking between networks according to the present invention;
FIG. 5 is a schematic structural diagram of Embodiment 1 of a network device according to the present invention;
FIG. 6 is a schematic structural diagram of Embodiment 1 of UE according to the present invention;
FIG. 7 is a schematic structural diagram of Embodiment 2 of a network device according to the present invention; and
FIG. 8 is a schematic structural diagram of Embodiment 2 of UE according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

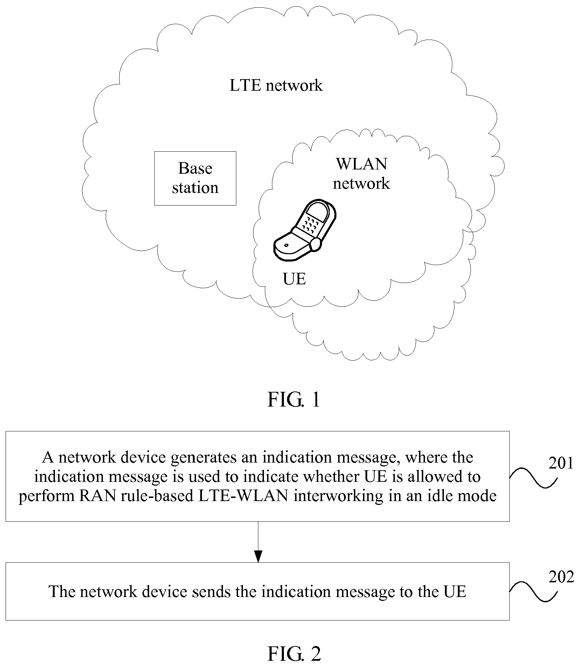

FIG. 1 is a schematic diagram of an application scenario of a method of interworking between networks according to the present invention. As shown in FIG. 1, the application scenario of the present invention may include an LTE network, a WLAN network, UE, and a base station. The UE may switch a service between the WLAN network and the LTE network by means of LTE-WLAN interworking.

It should be noted that the LTE is a fourth generation mobile communications (4G, Fourth generation) network. The present invention may be further applied to interworking between another network and the WLAN network, for example, interworking between a third generation mobile communications (3G, third generation) network and the WLAN network or interworking between a fifth generation mobile communications (5G, Fifth generation) network and the WLAN network.

In the embodiments of the present invention, the UE may also be referred to as a mobile terminal (English: Mobile Terminal), mobile user equipment, and the like, and may communicate with one or more core networks by using a RAN (Radio Access Network, radio access network). The UE may be a mobile terminal, such as a mobile phone (or referred to as a "cellular" phone) and a computer with a mobile terminal. For example, the UE may be a portable, pocket-sized, handheld, computer built-in, or in-vehicle mobile apparatus that exchanges voice and/or data with the radio access network. This is not limited in the present invention.

The base station may be an evolved NodeB (eNB, evolved Node B).

It should be noted that the LTE-WLAN interworking in the present invention may be RAN rule-based LTE-WLAN interworking. Specifically, the base station sends a related parameter of the LTE-WLAN interworking to the UE, for example, a signal strength threshold of the base station, a channel utilization threshold of the WLAN, a backhaul data rate threshold of the WLAN, a signal strength threshold of the WLAN, and an offload preference indicator (OPI, Offload Preference Indicator), and the UE completes a decision of interworking between the LTE and the WLAN for the UE, to determine a target WLAN for the UE. For a specific manner of the RAN rule-based LTE-WLAN interworking, refer to the 3^{rd} Generation Partnership Project (3GPP, 3rd Generation Partnership Project) 36.304-c series of protocols, for example, related content of 36.304-c20.

Alternatively, the LTE-WLAN interworking in the present invention may be enhanced LTE-WLAN interworking. Specifically, the base station completes a decision of interworking between the LTE and the WLAN for the UE according to a WLAN measurement report reported by the UE, to determine a target WLAN for the UE.

In the prior art, the UE may determine, in an idle mode by receiving the related parameter of LTE-WLAN interworking that is sent by the base station, that a network side supports the RAN rule-based LTE-WLAN interworking. However, for UE that is always in an idle mode after accessing a network, the UE cannot determine whether the network side supports the enhanced LTE-WLAN interworking. Therefore, the network side may expect that the UE performs the RAN rule-based LTE-WLAN interworking in an idle mode, while the UE does not perform the RAN rule-based LTE-WALN interworking in an idle mode; or the network side does not expect that the UE performs the RAN rule-based LTE-WLAN interworking in an idle mode, while the UE performs the RAN rule-based LTE-WLAN interworking in an idle mode. Therefore, the network side cannot accurately control the LTE-WLAN interworking for the UE in an idle mode.

FIG. 2 is a flowchart of Embodiment 1 of a method of interworking between networks according to the present invention. As shown in FIG. 2, the method in this embodiment may include the following steps.

Step 201: A network device generates an indication message, where the indication message is used to indicate whether UE is allowed to perform RAN rule-based LTE-WLAN interworking in an idle mode.

The idle mode (that is, RRC-IDLE) is that no RRC connection is established between the UE and an LTE network. That is, when the UE performs a service through a WLAN, but does not establish RRC connection with the LTE network, it is also considered as that the UE is in an idle mode.

Step 202: The network device sends the indication message to the UE.

In this embodiment, the network device sends the indication message to the UE, where the indication message is used to indicate whether the UE is allowed to perform the RAN rule-based LTE-WLAN interworking in an idle mode, so that the UE can determine, according to an indication of the network side, whether to perform the RAN rule-based LTE-WLAN interworking in an idle mode, and the network side can accurately control the LTE-WLAN interworking for the UE in an idle mode.

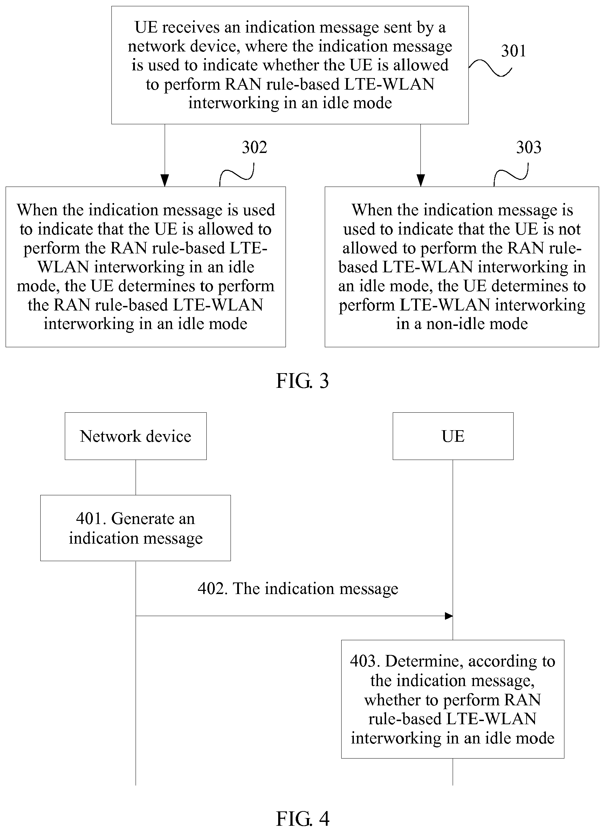

FIG. 3 is a flowchart of Embodiment 2 of a method of interworking between networks according to the present invention. As shown in FIG. 3, the method in this embodiment may include the following steps.

Step 301: UE receives an indication message sent by a network device, where the indication message is used to indicate whether the UE is allowed to perform RAN rule-based LTE-WLAN interworking in an idle mode.

Step 302: When the indication message is used to indicate that the UE is allowed to perform the RAN rule-based LTE-WLAN interworking in an idle mode, the UE determines to perform the RAN rule-based LTE-WLAN interworking in an idle mode.

Step 303: When the indication message is used to indicate that the UE is not allowed to perform the RAN rule-based LTE-WLAN interworking in an idle mode, the UE determines to perform LTE-WLAN interworking in a non-idle mode.

Specifically, when the UE determines, according to an indication of the indication information, not to perform the RAN rule-based LTE-WLAN interworking in an idle mode, the UE may determine to perform the LTE-WLAN interworking in a non-idle mode.

Optionally, that the UE determines to perform LTE-WLAN interworking in a non-idle mode includes:
determining, by the UE, to perform the RAN rule-based LTE-WLAN interworking in a non-idle mode; or determining, by the UE, to perform enhanced LTE-WLAN interworking in a non-idle mode.

A type of the LTE-WLAN interworking determined to be performed by the UE in a non-idle mode is not particularly limited in this embodiment of the present invention.

It should be noted that step 302 and step 303 are parallel branches.

In this embodiment, the UE receives the indication message sent by the network device, and the UE determines, according to the indication information sent by the network device, whether to perform the RAN rule-based LTE-WLAN interworking in an idle mode, so that the UE can determine, according to an indication of a network side, whether to perform the RAN rule-based LTE-WLAN interworking in an idle mode, and the network side can accurately control the LTE-WLAN interworking for the UE in an idle mode.

FIG. 4 is a flowchart of Embodiment 3 of a method of interworking between networks according to the present invention. As shown in FIG. 4, the method in this embodiment may include the following steps.

Step 401: A network device generates an indication message, where the indication message is used to indicate whether UE is allowed to perform RAN rule-based LTE-WLAN interworking in an idle mode.

Optionally, the indication message includes indication information (for example, first indication information) that is used to directly indicate whether the UE is allowed to perform the RAN rule-based LTE-WLAN interworking in an idle mode.

Alternatively, the indication message includes indication information (for example, second indication information) that is used to indicate whether the network device supports enhanced LTE-WLAN interworking. If the network device supports the enhanced LTE-WLAN interworking, it represents that the UE is not allowed to perform the RAN rule-based LTE-WLAN interworking in an idle mode; or if the network device does not support the enhanced LTE-WLAN interworking, it represents that the UE is allowed to perform the RAN rule-based LTE-WLAN interworking in an idle mode.

Specifically, the first indication information may be a bit (bit). When the bit is 1, the bit may be used to indicate that the UE is allowed to perform the RAN rule-based LTE-WLAN interworking in an idle mode. When the bit is 0 or does not appear, the bit may be used to indicate that the UE is not allowed to perform the RAN rule-based LTE-WALN interworking in an idle mode.

Specifically, the second indication information may be a bit. When the bit is 1, the bit may be used to indicate that the network device supports the enhanced LTE-WLAN interworking. When the bit is 0 or does not appear, the bit may be used to indicate that the network device does not support the enhanced LTE-WLAN interworking.

Optionally, when the indication message includes indication information that is used to directly indicate whether the UE is allowed to perform the RAN rule-based LTE-WLAN interworking in an idle mode, the indication message may further include information indicating whether the network device supports the enhanced LTE-WLAN interworking. That is, although the indication message includes the information indicating whether the network device supports the enhanced LTE-WLAN interworking, the indication information that directly indicates whether the UE is allowed to perform the RAN rule-based LTE-WLAN interworking in an idle mode is still used to control an action of the RAN rule-based LTE-WLAN interworking for the UE. Therefore, the network device is more flexible in controlling an action of the LTE-WLAN interworking for the UE.

Optionally, the network device may be a base station or a mobility management entity (MME, Mobility Management Entity).

Optionally, when the network device is the base station, the foregoing indication message may be a broadcast message or a radio resource control (RRC, Radio Resource Control) message. The indication information that indicates whether the UE is allowed to perform the RAN rule-based LTE-WLAN interworking in an idle mode is carried in the broadcast message or the RRC message, and therefore air interface resources may be reduced.

Optionally, when the network device is the MME, the indication message may be a non-access stratum (NAS, Non-Access-Stratum) message.

The RRC message may be, for example, an RRC connection reconfiguration message, and the NAS message may be, for example, a tracking area update (TAU, Tracking Area Update) accepting message or an attach (attach) accepting message.

Step 402: The network device sends the indication message to the UE.

Step 403: The UE determines, according to the indication message, whether to perform the RAN rule-based LTE-WLAN interworking in an idle mode.

Specifically, when the indication message is used to indicate that the UE is allowed to perform the RAN rule-based LTE-WLAN interworking in an idle mode, the UE determines to perform the RAN rule-based LTE-WLAN interworking in an idle mode; or when the indication message is used to indicate that the UE is not allowed to perform the RAN rule-based LTE-WLAN interworking in an idle mode, the UE determines not to perform the RAN rule-based LTE-WLAN interworking in an idle mode.

In this embodiment, the network device sends the indication message to the UE, where the indication message is used to indicate whether the UE is allowed to perform the RAN rule-based LTE-WLAN interworking in an idle mode, and the UE determines, according to the indication message, whether to perform the RAN rule-based LTE-WLAN interworking in an idle mode, so that the UE can determine, according to an indication of a network side, whether to perform the RAN rule-based LTE-WLAN interworking in an idle mode, and the network side can accurately control the LTE-WLAN interworking for the UE in an idle mode. Further, when the network side needs to use a policy of the enhanced LTE-WLAN interworking to balance load of the network side, the network side may control the UE that is in an idle mode not to use a policy of the RAN rule-based LTE-WLAN interworking to perform related processing, so that a problem that the load of the network side is unbalanced because the UE uses the policy of the RAN rule-based LTE-WLAN interworking to perform service migration in an idle mode is avoided.

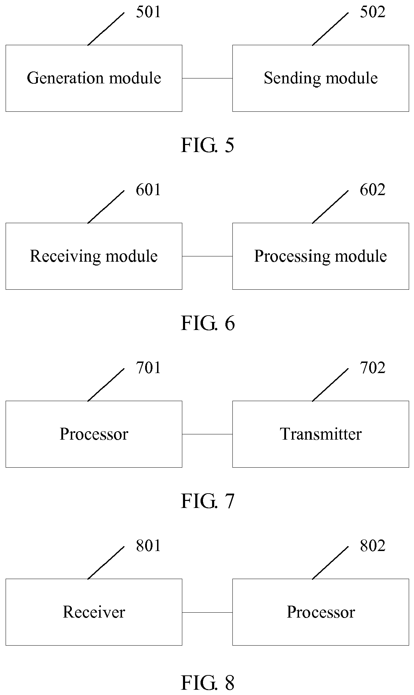

FIG. 5 is a schematic structural diagram of Embodiment 1 of a network device according to the present invention. As shown in FIG. 5, the network device in this embodiment may include a generation module 501 and a sending module 502. The generation module 501 is configured to generate an indication message, where the indication message is used to indicate whether user equipment (UE) is allowed to perform radio access network (RAN) rule-based LTE-WLAN interworking in an idle mode. The sending module 502 is configured to send the indication message to the UE.

Optionally, the indication message includes indication information that is used to indicate whether the UE is allowed to perform the RAN rule-based LTE-WLAN interworking in an idle mode.

Alternatively, the indication message includes information indicating whether the network device supports enhanced LTE-WLAN interworking. If the network device supports the enhanced LTE-WLAN interworking, it represents that the UE is not allowed to perform the RAN rule-based LTE-WLAN interworking in an idle mode; or if the network device does not support the enhanced LTE-WLAN interworking, it represents that the UE is allowed to perform the RAN rule-based LTE-WLAN interworking in an idle mode.

Optionally, when the indication message includes indication information that is used to indicate whether the UE is allowed to perform the RAN rule-based LTE-WLAN interworking in an idle mode, the indication message further includes:
information indicating whether the network device supports enhanced LTE-WLAN interworking.

Optionally, the network device is a base station or a mobility management entity (MME).

Optionally, when the network device is the base station, the indication message includes a broadcast message or a radio resource control message.

Optionally, when the network device is the MME, the indication message includes a non-access stratum (NAS) message.

The network device in this embodiment may be configured to execute technical solutions of a network device side in the method embodiment shown in FIG. 2 and the method embodiment shown in FIG. 4, and an implementation principle and a technical effect of the network device are similar to those of the technical solutions. Details are not described herein again.

FIG. 6 is a schematic structural diagram of Embodiment 1 of UE according to the present invention. As shown in FIG. 6, the UE in this embodiment may include a receiving module 601 and a processing module 602. The receiving module 601 is configured to receive an indication message sent by a network device, where the indication message is used to indicate whether the UE is allowed to perform radio access network (RAN) rule-based LTE-WLAN interworking in an idle mode. The processing module 602 is configured to: when the indication message is used to indicate that the UE is allowed to perform the RAN rule-based LTE-WLAN interworking in an idle mode, determine to perform the RAN rule-based LTE-WLAN interworking in an idle mode; or when the indication message is used to indicate that the UE is not allowed to perform the RAN rule-based LTE-WLAN interworking in an idle mode, determine to perform LTE-WLAN interworking in a non-idle mode.

Optionally, that the processing module 602 determines to perform LTE-WLAN interworking in a non-idle mode specifically includes:
determining to perform the RAN rule-based LTE-WLAN interworking in a non-idle mode; or determining to perform enhanced LTE-WLAN interworking in a non-idle mode.

Optionally, the indication message includes indication information that is used to indicate whether the UE is allowed to perform the RAN rule-based LTE-WLAN interworking in an idle mode.

Alternatively, the indication message includes information indicating whether the network device supports enhanced LTE-WLAN interworking. If the network device supports the enhanced LTE-WLAN interworking, it represents that the UE is not allowed to perform the RAN rule-based LTE-WLAN interworking in an idle mode; or if the network device does not support the enhanced LTE-WLAN interworking, it represents that the UE is allowed to perform the RAN rule-based LTE-WLAN interworking in an idle mode.

Optionally, when the indication message includes indication information that is used to indicate whether the UE is allowed to perform the RAN rule-based LTE-WLAN interworking in an idle mode, the indication message further includes:
information indicating whether the network device supports the enhanced LTE-WLAN interworking.

Optionally, the network device is a base station or a mobility management entity (MME).

Optionally, when the network device is the base station, the indication message includes a broadcast message or a radio resource control (RRC) message.

Optionally, when the network device is the MME, the indication message includes a non-access stratum (NAS) message.

The UE in this embodiment may be configured to execute technical solutions of a UE side in the method embodiment shown in FIG. 3 and the method embodiment shown in FIG. 4, and an implementation principle and a technical effect of the UE are similar to those of the technical solutions. Details are not described herein again.

FIG. 7 is a schematic structural diagram of Embodiment 2 of a network device according to the present invention. As shown in FIG. 7, the network device in this embodiment may include a processor 701 and a transmitter 702. The processor 701 is configured to generate an indication message, where the indication message is used to indicate whether user equipment (UE) is allowed to perform radio access network (RAN) rule-based LTE-WLAN interworking in an idle mode. The transmitter 702 is configured to send the indication message to the UE.

Optionally, the indication message includes indication information that is used to indicate whether the UE is allowed to perform the RAN rule-based LTE-WLAN interworking in an idle mode.

Alternatively, the indication message includes information indicating whether the network device supports enhanced LTE-WLAN interworking. If the network device supports the enhanced LTE-WLAN interworking, it represents that the UE is not allowed to perform the RAN rule-based LTE-WLAN interworking in an idle mode; or if the network device does not support the enhanced LTE-WLAN interworking, it represents that the UE is allowed to perform the RAN rule-based LTE-WLAN interworking in an idle mode.

Optionally, when the indication message includes indication information that is used to indicate whether the UE is allowed to perform the RAN rule-based LTE-WLAN interworking in an idle mode, the indication message further includes:
information indicating whether the network device supports enhanced LTE-WLAN interworking.

Optionally, the network device is a base station or a mobility management entity (MME).

Optionally, when the network device is the base station, the indication message includes a broadcast message or a radio resource control (RRC) message.

Optionally, when the network device is the MME, the indication message includes a non-access stratum (NAS) message.

It may be understood that the network device provided in this embodiment of the present invention may further include but is not limited to one or more of: a memory, a transceiver, a power supply unit, a transmission part, an alarm part, an antenna part, or an operation and maintenance part. A person of ordinary skill in the art may understand that a communications device may have different components according to different implementations, and this is not limited in this embodiment of the present invention.

The network device in this embodiment may be configured to execute technical solutions of a network device side in the method embodiment shown in FIG. 2 and the method embodiment shown in FIG. 4, and an implementation principle and a technical effect of the network device are similar to those of the technical solutions. Details are not described herein again.

FIG. 8 is a schematic structural diagram of Embodiment 2 of UE according to the present invention. As shown in FIG. 8, the UE in this embodiment may include a receiver 801 and a processor 802. The receiver 801 is configured to receive an indication message sent by a network device, where the indication message is used to indicate whether the UE is allowed to perform radio access network (RAN) rule-based LTE-WLAN interworking in an idle mode. The processor 802 is configured to: when the indication message is used to indicate that the UE is allowed to perform the RAN rule-based LTE-WLAN interworking in an idle mode, determine to perform the RAN rule-based LTE-WLAN interworking in an idle mode; or when the indication message is used to indicate that the UE is not allowed to perform the RAN rule-based LTE-WLAN interworking in an idle mode, determine to perform LTE-WLAN interworking in a non-idle mode.

Optionally, that the processor 802 determines to perform LTE-WLAN interworking in a non-idle mode specifically includes:
determining to perform the RAN rule-based LTE-WLAN interworking in a non-idle mode; or determining to perform enhanced LTE-WLAN interworking in a non-idle mode.

Optionally, the indication message includes indication information that is used to indicate whether the UE is allowed to perform the RAN rule-based LTE-WLAN interworking in an idle mode.

Alternatively, the indication message includes information indicating whether the network device supports enhanced LTE-WLAN interworking. If the network device supports the enhanced LTE-WLAN interworking, it represents that the UE is not allowed to perform the RAN rule-based LTE-WLAN interworking in an idle mode.

Optionally, when the indication message includes indication information that is used to indicate whether the UE is allowed to perform the RAN rule-based LTE-WLAN interworking in an idle mode, the indication message further includes:
information indicating whether the network device supports the enhanced LTE-WLAN interworking.

Optionally, the network device is a base station or a mobility management entity (MME).

Optionally, when the network device is the base station, the indication message includes a broadcast message or a radio resource control (RRC) message.

Optionally, when the network device is the MME, the indication message includes a non-access stratum (NAS) message.

It may be understood that the UE provided in this embodiment of the present invention may further include but is not limited to one or more of: a memory, a transceiver, a power supply unit, a transmission part, an alarm part, an antenna part, or an operation and maintenance part. A person of ordinary skill in the art may understand that a communications device may have different components according to different implementations, and this is not limited in this embodiment of the present invention.

The UE in this embodiment may be configured to execute technical solutions of a UE side in the method embodiment shown in FIG. 3 and the method embodiment shown in FIG. 4, and an implementation principle and a technical effect of the UE are similar to those of the technical solutions. Details are not described herein again.

Based on the foregoing descriptions of the embodiments, a person skilled in the art may clearly understand that the present invention may be implemented by software in addition to a necessary universal hardware platform or by hardware only. In most circumstances, the former is a preferred implementation. Based on such an understanding, the technical solutions of the present invention essentially, or the part contributing to the prior art may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. A person of ordinary skill in the art may understand and implement the embodiments of the present invention without creative efforts.

In addition, the described apparatus and method, and schematic diagrams of different embodiments can be combined or integrated with other systems, modules, technologies, or methods without departing from the scope of this application. In addition, the displayed or discussed mutual couplings or direct couplings or communication connections may be implemented through some interfaces. The indirect couplings or communication connections between the base stations or units may be implemented in electronic, mechanical, or other forms.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method of interworking between networks, comprising:
receiving, by user equipment (UE), an indication message sent by a network device, wherein the indication message is used to indicate whether the UE is allowed to perform radio access network (RAN) rule-based long term evolution (LTE)-wireless local area network (WLAN) interworking in an idle mode; and
when the indication message is used to indicate that the UE is allowed to perform the RAN rule-based LTE-WLAN interworking in an idle mode, determining, by the UE, to perform the RAN rule-based LTE-WLAN interworking in an idle mode; or
when the indication message is used to indicate that the UE is not allowed to perform the RAN rule-based LTE-WLAN interworking in an idle mode, determining, by the UE, to perform LTE-WLAN interworking in a non-idle mode.

2. The method according to claim 1, wherein the determining, by the UE, to perform the LTE-WLAN interworking in the non-idle mode comprises:
determining, by the UE, to perform the RAN rule-based LTE-WLAN interworking in the non-idle mode; or
determining, by the UE, to perform enhanced LTE-WLAN interworking in the non-idle mode.

3. The method according to claim 1 or 2, wherein the indication message comprises indication information that is used to indicate whether the UE is allowed to perform the RAN rule-based LTE-WLAN interworking in an idle mode.

4. The method according to claim 3, wherein the indication message further comprises:
information indicating whether the network device supports the enhanced LTE-WLAN interworking.

5. The method according to claim 1 or 2, wherein the indication message comprises information indicating whether the network device supports the enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

6. The method according to any one of claims 1 to 5, wherein the network device is the base station, and the indication message comprises a broadcast message or a radio resource control (RRC) message.

7. The method according to any one of claims 1 to 5, wherein the network device is a mobility management entity (MME), and the indication message comprises a non-access stratum (NAS) message.

8. A method of interworking between networks, comprising:
generating, by a network device, an indication message, wherein the indication message is used to indicate whether user equipment (UE) is allowed to perform radio access network (RAN) rule-based long term evolution (LTE)-wireless local area network (WLAN) interworking in an idle mode; and
sending, by the network device, the indication message to the UE.

9. The method according to claim 8, wherein the indication message comprises information indicating whether the network device supports enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

10. The method according to claim 8, wherein the indication message comprises indication information that is used to indicate whether the UE is allowed to perform the RAN rule-based LTE-WLAN interworking in an idle mode.

11. The method according to claim 10, wherein the indication message further comprises:
information indicating whether the network device supports enhanced LTE-WLAN interworking.

12. The method according to any one of claims 8 to 11, wherein the network device is the base station, and the indication message comprises a broadcast message or a radio resource control message.

13. The method according to any one of claims 8 to 12, wherein the network device is a mobility management entity (MME), and the indication message comprises a non-access stratum (NAS) message.

14. User equipment (UE), comprising:
a receiving module, configured to receive an indication message sent by a network device, wherein the indication message is used to indicate whether the UE is allowed to perform radio access network (RAN) rule-based Long Term Evolution (LTE)-wireless local area network (WLAN) interworking in an idle mode; and
a processing module, configured to: when the indication message is used to indicate that the UE is allowed to perform the RAN rule-based LTE-WLAN interworking in an idle mode, determine to perform the RAN rule-based LTE-WLAN interworking in an idle mode; or when the indication message is used to indicate that the UE is not allowed to perform the RAN rule-based LTE-WLAN interworking in an idle mode, determine to perform LTE-WLAN interworking in a non-idle mode.

15. The UE according to claim 14, wherein that the processing module determines to perform the LTE-WLAN interworking in a non-idle mode specifically comprises:
determining to perform the RAN rule-based LTE-WLAN interworking in a non-idle mode; or determining to perform enhanced LTE-WLAN interworking in a non-idle mode.

16. The UE according to claim 14 or 15, wherein the indication message comprises indication information that is used to indicate whether the UE is allowed to perform the RAN rule-based LTE-WLAN interworking in an idle mode.

17. The UE according to claim 16, wherein the indication message further comprises:
information indicating whether the network device supports the enhanced LTE-WLAN interworking.

18. The UE according to claim 14 or 15, wherein the indication message comprises information indicating whether the network device supports the enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

19. The UE according to any one of claims 14 to 18, wherein the network device is the base station, and the indication message comprises a broadcast message or a radio resource control (RRC) message.

20. The UE according to any one of claims 14 to 18, wherein the network device is a mobility management entity (MME), and the indication message comprises a non-access stratum (NAS) message.

21. A network device, comprising:
a generation module, configured to generate an indication message, wherein the indication message is used to indicate whether user equipment (UE) is allowed to perform radio access network (RAN) rule-based Long Term Evolution (LTE)-wireless local area network (WLAN) interworking in an idle mode; and
a sending module, configured to send the indication message to the UE.

22. The network device according to claim 21, wherein the indication message comprises indication information that is used to indicate whether the UE is allowed to perform the RAN rule-based LTE-WLAN interworking in an idle mode.

23. The network device according to claim 22, wherein the indication message further comprises:
information indicating whether the network device supports enhanced LTE-WLAN interworking.

24. The network device according to claim 21, wherein the indication message comprises information indicating whether the network device supports enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

25. The network device according to any one of claims 21 to 24, wherein the network device is the base station, and the indication message comprises a broadcast message or a radio resource control message.

26. The network device according to any one of claims 21 to 24, wherein the network device is a mobility management entity (MME), and the indication message comprises a non-access stratum (NAS) message.

27. User equipment (UE), comprising:
a receiver, configured to receive an indication message sent by a network device, wherein the indication message is used to indicate whether the UE is allowed to perform radio access network (RAN) rule-based long term evolution (LTE)-wireless local area network (WLAN) interworking in an idle mode; and
a processor, configured to: when the indication message is used to indicate that the UE is allowed to perform the RAN rule-based LTE-WLAN interworking in an idle mode, determine to perform the RAN rule-based LTE-WLAN interworking in an idle mode; or when the indication message is used to indicate that the UE is not allowed to perform the RAN rule-based LTE-WLAN interworking in an idle mode, determine to perform LTE-WLAN interworking in a non-idle mode.

28. The UE according to claim 27, wherein that the processor determines to perform the LTE-WLAN interworking in a non-idle mode specifically comprises:
determining to perform the RAN rule-based LTE-WLAN interworking in a non-idle mode; or determining to perform enhanced LTE-WLAN interworking in a non-idle mode.

29. The UE according to claim 27 or 28, wherein the indication message comprises indication information that is used to indicate whether the UE is allowed to perform the RAN rule-based LTE-WLAN interworking in an idle mode.

30. The UE according to claim 29, wherein the indication message further comprises:
information indicating whether the network device supports the enhanced LTE-WLAN interworking.

31. The UE according to claim 27 or 28, wherein the indication message comprises information indicating whether the network device supports the enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

32. The UE according to any one of claims 27 to 31, wherein the network device is the base station, and the indication message comprises a broadcast message or a radio resource control (RRC) message.

33. The UE according to any one of claims 27 to 31, wherein the network device is a mobility management entity (MME), and the indication message comprises a non-access stratum (NAS) message.

34. A network device, comprising:
a processor, configured to generate an indication message, wherein the indication message is used to indicate whether user equipment (UE) is allowed to perform radio access network (RAN) rule-based long term evolution (LTE)-wireless local area network (WLAN) interworking in an idle mode; and
a transmitter, configured to send the indication message to the UE.

35. The network device according to claim 34, wherein the indication message comprises indication information that is used to indicate whether the UE is allowed to perform the RAN rule-based LTE-WLAN interworking in an idle mode.

36. The network device according to claim 35, wherein the indication message further comprises:
information indicating whether the network device supports enhanced LTE-WLAN interworking.

37. The network device according to claim 34, wherein the indication message comprises information indicating whether the network device supports enhanced LTE-WLAN interworking; and
if the network device supports the enhanced LTE-WLAN interworking, it represents that the UE is not allowed to perform the RAN rule-based LTE-WLAN interworking in an idle mode; or
if the network device does not support the enhanced LTE-WLAN interworking, it represents that the UE is allowed to perform the RAN rule-based LTE-WLAN interworking in an idle mode.

38. The network device according to any one of claims 34 to 37, wherein the network device is the base station, and the indication message comprises a broadcast message or a radio resource control message.

39. The network device according to any one of claims 34 to 37, wherein the network device is a mobility management entity (MME), and the indication message comprises a non-access stratum (NAS) message.
